# EUROPEAN PATENT SPECIFICATION

(11) **EP 3 687 131 B1**
(45) Date of publication and mention of the grant of the patent: **21.01.2026**
(21) Application number: 17928191.0
(22) Date of filing: 13.10.2017
(51) Int. Cl.: H04L 45/00, H04L 45/16, H04L 49/201, H04L 9/40, H04L 12/437, H04L 45/28, H04L 12/18

(54) **METHOD, APPARATUS AND SYSTEM FOR RAPIDLY RESTORING SERVICE DURING PATH SWITCHING**
VERFAHREN, VORRICHTUNG UND SYSTEM ZUR SCHNELLEN WIEDERHERSTELLUNG DES DIENSTES WÄHREND EINER PFADUMSCHALTUNG
PROCÉDÉ, APPAREIL ET SYSTÈME PERMETTANT DE RESTAURER RAPIDEMENT UN SERVICE PENDANT UNE COMMUTATION DE TRAJET

(43) Date of publication of application: 29.07.2020
(73) Proprietor: Huawei Technologies Co., Ltd., Longgang District Shenzhen, Guangdong 518129 (CN)
(72) Inventor: MENG, Li, Shenzhen, Guangdong 518129 (CN); LI, Weiguo, Shenzhen, Guangdong 518129 (CN); MENG, Wanhong, Shenzhen, Guangdong 518129 (CN); GAO, Meng, Shenzhen, Guangdong 518129 (CN)
(74) Representative: Maiwald GmbH
(86) International application number: PCT/CN2017/106113
(87) International publication number: WO 2019/071585

(56) References cited:
- EP-A2- 1 804 423
- WO-A1-2012/163032
- CN-A- 101 448 003
- CN-A- 103 051 536
- CN-A- 103 546 383
- CN-C- 100 409 634
- US-A1- 2011 249 551

## Description

### TECHNICAL FIELD

This application relates to the field of communications technologies, and in particular, to a fast service restoration method in a path switching process, and a system.

### BACKGROUND

In a typical ring network topology, each switch of a network system is connected to exactly two other switches, physically forming a ring network structure. It can be learned from a broadcast domain of a layer 2 switching network that a physical ring causes a broadcast storm. Therefore, the ring network control protocol needs to be run to selectively block some ports and finally prune the ring network structure into a loop-free tree network structure. This prevents a packet from continuously replicating and infinitely circulating on a ring network, and avoids reduction in a packet processing capability of a switch caused by repeatedly receiving a same packet.

In addition to the ring network protection protocol, a link management protocol such as the link aggregation control protocol (Link Aggregation Control Protocol, LACP), the Ethernet ring protection switching (Ethernet ring protection switching, ERPS) protocol, the protection switching (Protect Switching, PS) protection group protocol, or the enhanced trunk (Enhanced Trunk, E-trunk) protocol sets service path blocking. In blocking, a multicast control packet and a multicast service packet are discarded, and only a link management protocol packet of the LACP, ERPS, PS protection group, or E-trunk is allowed to pass. A blocking action of the ring network protocol discards the multicast control packet, so that when blocking is canceled, the multicast control packet needs to be renegotiated. Consequently, service restoration takes a long time and user experience is poor.

D1 (EP 1 804 423 A2) discloses a method for rapidly recovering multicast service, a first network device having at least one link connected to a second network device and receiving a multicast data stream, the method comprising: a) the first network device performing link fault detection and link recovery; b) the first network device actively sending a multicast request message to the second network device via a recovered link to recover the multicast data stream; c) the second network device parsing said multicast request message and providing the multicast data stream to the first network device.

D2 (CN100409634C) discloses a fast ring network protecting method. D2 relates to a master node may actively detect the link failure of the ring network by polling the ring optical transport mechanism, and the master node also detect primary port straight connection link failure, if a failure occurs then the release the secondary port, the refresh loopful forwarding table; master node to detect a primary port of the temporary blocking measures may also be taken after link restoration provides a straight connection, to prevent the occurrence of a temporary loop.

D3 (US2011249551) discloses virtual snooping bridge in computer networks, techniques are described for implementing a virtual snooping bridge in computer networks. The techniques may be implemented by a ring network comprised of a plurality of ring network devices arranged in a ring topology.

### SUMMARY

Embodiments of this application provide a fast service restoration method in a path switching process, a device, and a system. A multicast control packet can penetrate a blocked node and be sent to a multicast server. When the node is unblocked, a first device has already established negotiation of a service protocol with the multicast server and establishment of forwarding table entries. This greatly quickens restoration of a multicast service and improves user experience.

The invention is defined by the independent claims. Further embodiments of the invention are defined by the dependent claims. Although the invention is only defined by the claims, the below embodiments, examples and aspects are present for aiding in understanding the background and advantages of the invention.

### BRIEF DESCRIPTION OF DRAWINGS

FIG. 1 is a schematic block diagram of an application scenario of a technical solution according to an embodiment of this application;
FIG. 2 is a schematic block diagram of an application scenario of a technical solution according to an embodiment of this application;
FIG. 3 is a flowchart of a fast service restoration method in a path switching process according to an embodiment of this application;
FIG. 4 is a flowchart of another fast service restoration method in a path switching process according to an embodiment of this application;
FIG. 5A and FIG. 5B are schematic block diagrams of a device according to an embodiment of this application;
FIG. 6 is a schematic block diagram of a system according to an embodiment of this application; and
FIG. 7 is a schematic block diagram of a communications device according to an embodiment of this application.

### DESCRIPTION OF EMBODIMENTS

The following describes technical solutions of this application with reference to accompanying drawings.

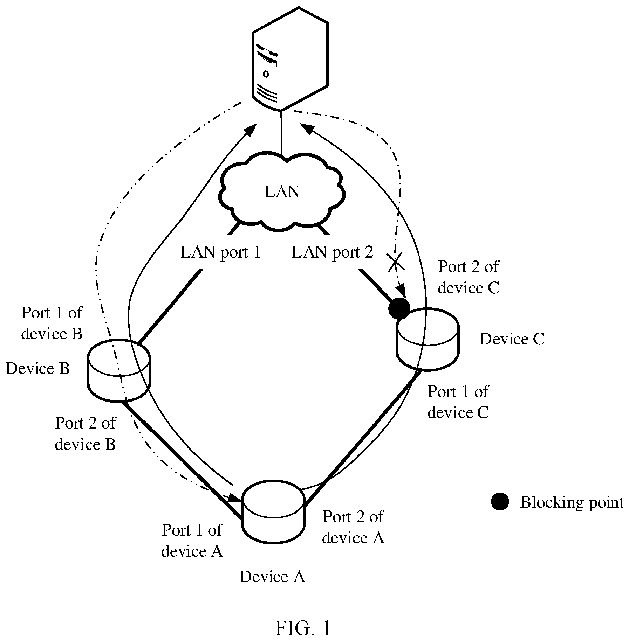

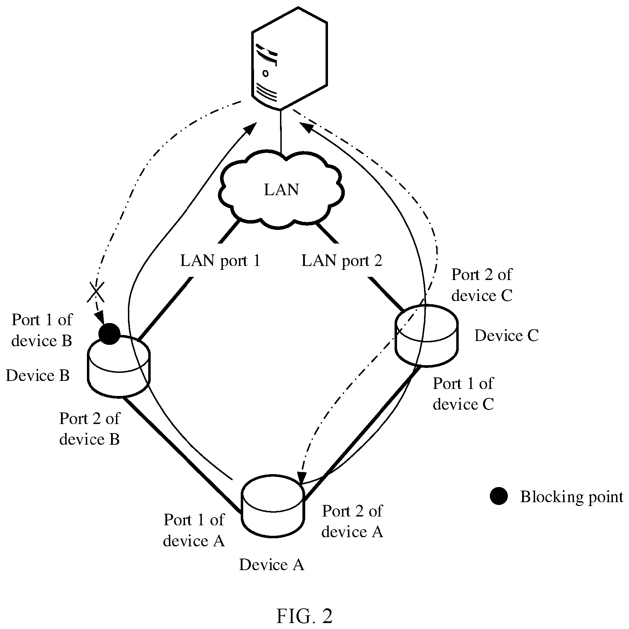

FIG. 1 and FIG. 2 are schematic block diagrams of an application scenario of a technical solution according to an embodiment of this application. As shown in FIG. 1 and FIG. 2, in a scenario of a ring network or a plurality of forwarding paths, a device (Device) A sends multicast control packets to two ports (A P1 and A P2) respectively, and the multicast control packet passing through a device B can be successfully forwarded to a multicast server. In addition, the multicast control packet passing through a device C can also penetrate blocking specified by a ring network protocol and finally reach the multicast server. For both the paths in the figure, the multicast control packets reach the server, and for both forwarding table entries are established. For example, the multicast server simultaneously forwards video packets over the two paths. The multicast service packet passing through the device B is finally sent to the device A, while the multicast service packet destined for the device C is discarded due to the blocking specified by the ring network protocol. The device A receives only one multicast service packet.

The ring network protocol controls a blocking point to change, so that a forwarding path is switched, and P2 of the device C is unblocked. Because the forwarding table entry has been established, the multicast service packet is immediately forwarded to the device A. Without time spent on negotiation of a service protocol and forwarding table entry establishment, time spent on path switching includes only time spent on blocking reconfiguration of the ring network protocol and link protection. A user does not experience a service switching latency. This greatly quickens restoration of a multicast service and improves user experience.

It should be noted that there may be a plurality of ring network protocols, for example, the spanning tree protocol (Spanning Tree Protocol, STP) and various improved spanning tree protocols based on the STP, or the link aggregation group (Link Aggregation Group, LAG) protocol, the Ethernet ring protection switching (Ethernet Ring Protection Switching, ERPS) protocol, or the enhanced trunk (Enhanced Trunk, E-trunk) protocol that set blocking. This is not limited in this embodiment of this application.

Optionally, the device in this embodiment of this application may be a core router (Core Router, CR), a broadband remote access server (Broadband Remote Access Server, BRAS), a LAN switch (LAN Switch, LSW), an optical line terminal (Optical Line Terminal, OLT), a home gateway (Home Gateway, HG), or the like. This is not limited in this embodiment of this application.

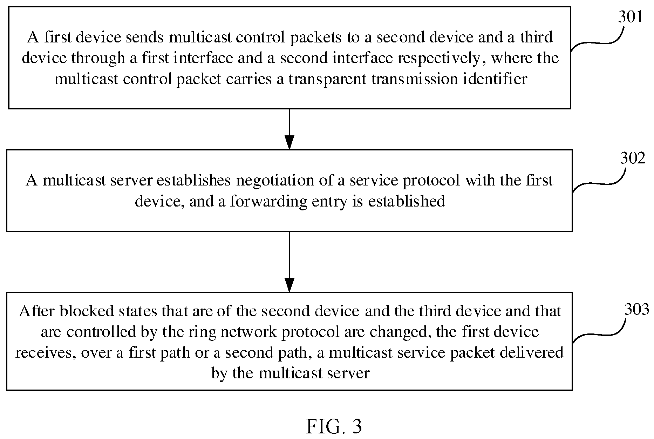

FIG. 3 is a flowchart of a fast service restoration method in a path switching process according to an embodiment of this application. The method includes the following steps:
S301: A first device sends multicast control packets to a second device and a third device through a first interface and a second interface respectively, where the multicast control packet carries a transparent transmission identifier, a port of at least one of the second device and the third device is in a blocked state controlled by a ring network protocol, both the second device and the third device are connected to a multicast server, and the multicast control packets are sent to the multicast server through ports of the second device and the third device.
S302: The multicast server establishes negotiation of a service protocol with the first device, and a forwarding table entry is established.
S303: After the blocked states that are of the second device and the third device that are controlled by the ring network protocol are changed, the first device receives, over a first path or a second path, a multicast service packet delivered by the multicast server. In step S303, as shown in FIG. 2, the ring network protocol controls a blocking point to change, so that a forwarding path is switched, and P1 of the device C is unblocked. Because the forwarding table entry has been established, the multicast service packet delivered by the multicast server is immediately forwarded to the device A through the device C.

In this embodiment of this application, a penetration identifier is added to the multicast control packet, so that the multicast control packet can penetrate a blocked node and be sent to the multicast server, and the first device can establish negotiation of a service protocol with the multicast server and establish a forwarding table entry in advance. When the blocked node is unblocked, the first device can receive, over a normal path, the multicast service packet delivered by the multicast server. A user does not experience a service switching latency. This greatly quickens restoration of a multicast service and improves user experience.

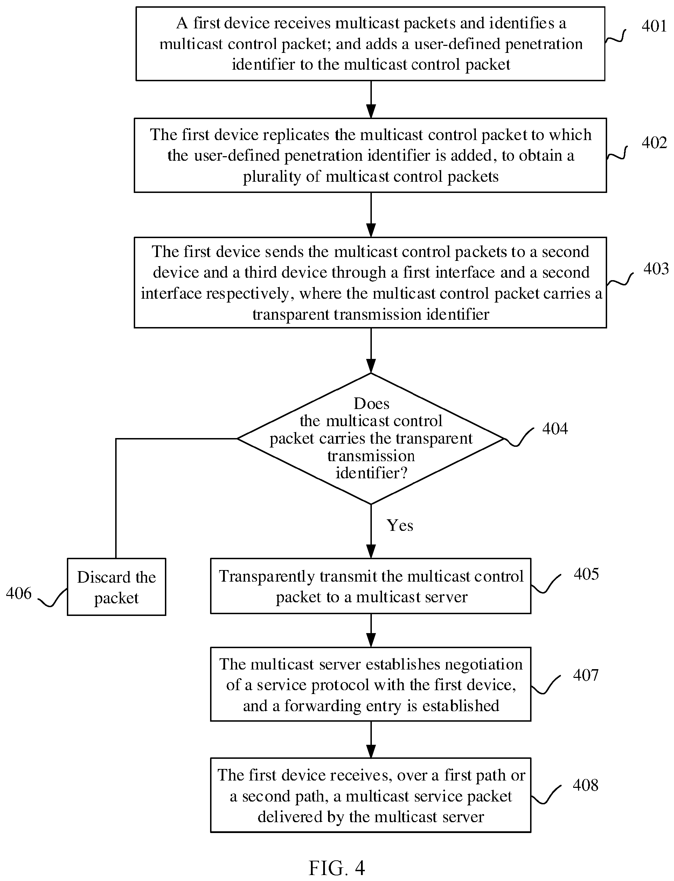

FIG. 4 shows a fast service restoration method in a path switching process according to an embodiment of this application. The method includes the following steps:
S401: A first device receives multicast packets and identifies a multicast control packet; and adds a user-defined penetration identifier to the multicast control packet.
S402: The first device replicates the multicast control packet to which the user-defined penetration identifier is added, to obtain a plurality of multicast control packets. S403: The first device sends the multicast control packets to a second device and a third device through a first interface and a second interface respectively, where the multicast control packet carries a transparent transmission identifier, a port of at least one of the second device and the third device is in a blocked state controlled by a ring network protocol, both the second device and the third device are connected to a multicast server, and the multicast control packets are sent to the multicast server through ports of the second device and the third device.
S404: After receiving the multicast control packet, the second device or the third device determines whether the multicast control packet carries the transparent transmission identifier; if the multicast control packet carries the transparent transmission identifier, proceed to step S405; if the multicast control packet does not carry the transparent transmission identifier, proceed to step S406.
S405: Transparently transmit the multicast control packet to the multicast server.
S406: Discard the multicast control packet.
S407: The multicast server establishes negotiation of a service protocol with the first device, and a forwarding table entry is established.
S408: After the blocked states that are of the second device and the third device that are controlled by the ring network protocol are changed, the first device receives, over a first path or a second path, a multicast service packet delivered by the multicast server.

The foregoing is merely an example for description. In another possible implementation, the second device may further send the multicast control packet to a fourth device, and the third device may further send the multicast control packet to a fifth device. The fourth device is connected between the second device and the multicast server, and the fifth device is connected between the third device and the multicast server. The fourth device and the fifth device receive the multicast control packets and further send the multicast control packets to the multicast server.

In this embodiment of this application, the penetration identifier is added to the multicast control packet, so that the multicast control packet can penetrate a blocked node and be sent to the multicast server, and the first device can establish negotiation of a service protocol with the multicast server and establish a forwarding table entry in advance. When the blocked node is unblocked, the first device can receive, over a normal path, the multicast service packet delivered by the multicast server. A user does not experience a service switching latency. This greatly quickens restoration of a multicast service and improves user experience.

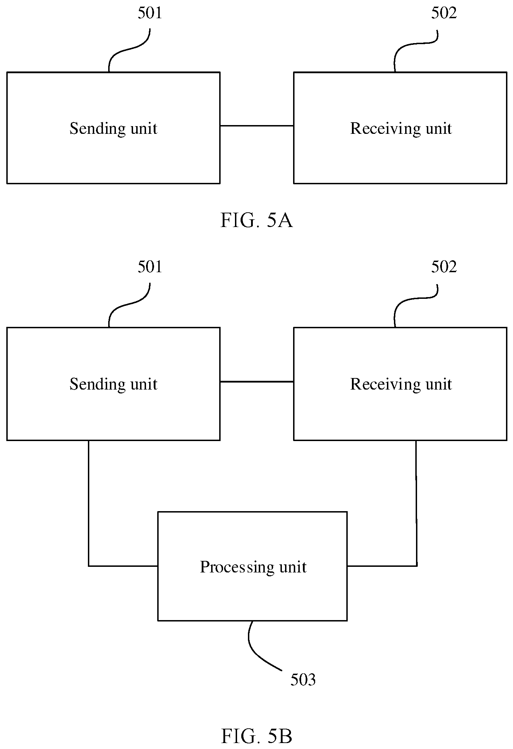

As shown in FIG. 5A, according to a second aspect, an embodiment of this application provides a device 500. The device 500 is connected to a second device and a third device through a first interface and a second interface respectively, where a port of at least one of the second device and the third device is in a blocked state controlled by a ring network protocol, and both the second device and the third device are connected to a multicast server. The device 500 includes:
a sending unit 501, configured to send multicast control packets to the second device and the third device through the first interface and the second interface respectively, where the multicast control packet carries a transparent transmission identifier, the port of at least one of the second device and the third device is in the blocked state controlled by the ring network protocol, both the second device and the third device are connected to the multicast server, the multicast control packets are sent to the multicast server through ports of the second device and the third device, negotiation of a service protocol is established with the multicast server, and a forwarding table entry is established; and
a receiving unit 502, configured to: after the blocked states that are of the second device and the third device that are controlled by the ring network protocol are changed, receive, over a first path or a second path, a multicast service packet delivered by the multicast server.

Specifically, there may be two cases. In a first case, for packets directly forwarded by hardware, the first device adds a penetration identifier to a multicast control packet that is expected to perform penetration, and after the multicast control packet is sent to the second device and the third device, the second device and the third device identify the multicast control packet by using an existing packet parsing module, and deliver the multicast control packet to a packet processing module. The packet processing module performs the following determining: In a blocked state, a multicast control packet having the penetration identifier is allowed to continue to be forwarded, and a multicast control packet having no penetration identifier is directly discarded; in an unblocked state, all packets can be forwarded.

In a second case, for packets that are sent to and forwarded by CPU software, the second device and the third device identify a multicast control packet by using an existing packet parsing module, and deliver the multicast control packet to a software packet processing module. The software packet processing module performs the following determining: In a blocked state, a packet having a penetration identifier is allowed to continue to be forwarded by the CPU software, and the packet having no penetration identifier is directly discarded; in an unblocked state, all packets continue to be forwarded by the CPU software.

In an implementation, after receiving the multicast control packet, the second device or the third device determines whether the multicast control packet carries the transparent transmission identifier, and if the multicast control packet carries the transparent transmission identifier, transparently transmits the multicast control packet to the multicast server.

In an implementation, as shown in FIG. 5B, the device 500 further includes a processing unit 503. Before the sending unit 501 sends the multicast control packets to the second device and the third device through the first interface and the second interface respectively, the receiving unit 502 is further configured to receive multicast packets, and send the multicast packets to the processing unit 503. The processing unit 503 identifies the multicast control packet and adds a user-defined penetration identifier to the multicast control packet.

In an implementation, the processing unit 503 is further configured to replicate the multicast control packet to which the user-defined penetration identifier is added, to obtain a plurality of multicast control packets. Then the plurality of multicast control packets are sent to the second device and the third device.

The foregoing is merely an example for description. In another possible implementation, before the multicast control packets are sent to the multicast server through the ports of the second device and the third device, the second device sends the multicast control packet to a fourth device, and the third device sends the multicast control packet to a fifth device; where the fourth device is connected between the second device and the multicast server, and the fifth device is connected between the third device and the multicast server.

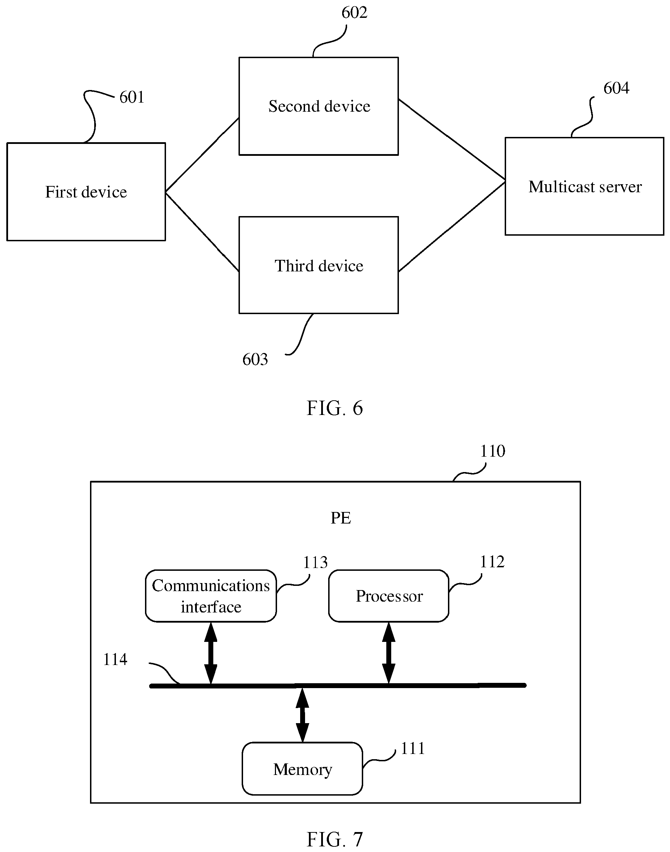

As shown in FIG. 6, an embodiment of this application provides a multicast system. The system includes a first device 601, a second device 602, a third device 603, and a multicast server 604. The first device 601 is connected to the second device 602 and the third device603 through a first interface and a second interface respectively. A port of at least one of the second device 602 and the third device 603 is in a blocked state controlled by a ring network protocol. Both the second device 602 and the third device 603 are connected to the multicast server 604.

The first device 601 sends multicast control packets to the second device 602 and the third device 603 through the first interface and the second interface respectively. The multicast control packet carries a transparent transmission identifier. The multicast control packets are sent to the multicast server 604 through ports of the second device 602 and the third device 603, negotiation of a service protocol is established with the multicast server 604, and a forwarding table entry is established. After the blocked states that are of the second device and the third device that are controlled by the ring network protocol are changed, the first device 601 receives, over a first path or a second path, a multicast service packet delivered by the multicast server 604.

Optionally, after receiving the multicast control packet, the second device 602 or the third device 603 determines whether the multicast control packet carries the transparent transmission identifier, and if the multicast control packet carries the transparent transmission identifier, transparently transmits the multicast control packet to the multicast server 604.

Optionally, before sending the multicast control packets to the second device 602 and the third device 603 through the first interface and the second interface respectively, the first device 601 is further configured to: after receiving multicast packets, identify the multicast control packet and add a user-defined penetration identifier to the multicast control packet.

Optionally, the first device 601 is further configured to replicate the multicast control packet to which the user-defined penetration identifier is added, to obtain a plurality of multicast control packets.

Optionally, before the multicast control packets are sent to the multicast server 604 through the ports of the second device 602 and the third device 603, the second device 602 sends the multicast control packet to a fourth device (not shown in the figure), and the third device 603 sends the multicast control packet to a fifth device (not shown in the figure); where the fourth device is connected between the second device 602 and the multicast server 604, and the fifth device is connected between the third device 603 and the multicast server 604. The fourth device and the fifth device receive the multicast control packets and further send the multicast control packets to the multicast server 604.

As shown in FIG. 7, an embodiment of this application provides a device 110. The device 110 includes a processor 112, a communications interface 113, and a memory 111. Optionally, the device 110 may further include a bus 114. The communications interface 113, the processor 112, and the memory 111 are connected to each other by using the bus 114. The bus 114 may be a peripheral component interconnect (Peripheral Component Interconnect, PCI) bus, an extended industry standard architecture (Extended Industry Standard Architecture, EISA) bus, or the like. The bus 114 may be classified as an address bus, a data bus, a control bus, or the like. For ease of representation, only one thick line is used to represent the bus 114 in FIG. 7, but this does not mean that there is only one bus or only one type of bus.

The memory 111 is configured to store an instruction that can be executed by the processor 112, and the processor 112 is configured to invoke the instruction stored in the memory 111, to perform the steps in the foregoing fast service restoration method in the path switching process.

All or some of the steps of the foregoing method embodiments may be implemented by a program instructing relevant hardware. The foregoing program may be stored in a readable memory. When the program is executed, the steps of the foregoing method embodiments are performed. The memory (storage medium) includes: a read-only memory (Read-only Memory, ROM), a RAM, a flash memory, a hard disk, a solid-state drive, a magnetic tape (magnetic tape), a floppy disk (floppy disk), an optical disc (optical disc), and any combination thereof.

The foregoing descriptions are merely specific implementations of the present invention, but are not intended to limit the protection scope of the present invention, the scope of the claim is defined by the appended claims.

Any variation or replacement readily figured out by a person skilled in the art within the technical scope disclosed in the present invention shall fall within the protection scope of the present invention as long as they do not depart from the scope of the invention as it is depicted by the appended claims.

Therefore, the protection scope of the present invention shall be subject to the protection scope of the claims.

## Claims

1. A fast service restoration method in a path switching process, comprising:
sending a multicast control packet to a second device (602) by a first interface of a first device (601), wherein a port of the second device (602) is in a blocked state controlled by a ring network protocol, the multicast control packet carries a transparent transmission identifier which is configured to indicate a device in the blocked state to transparently transmit the multicast control packet to a multicast server (605), so that the multicast control packet is sent to the multicast server (605) through the port of the second device (602);
sending the multicast control packet to a third device (603) by a second interface of the first device (601), wherein a port of the third device (603) is not in the blocked state, so that the multicast control packet is sent to the multicast server (605) through the port of the third device (603);
wherein the multicast control packet is configured to establish negotiation of a service protocol with the multicast server (605) and to establish a forwarding table entry with the multicast server (605) for the path through the second device (602) and the path through the third device (603);
receiving by the first device (601), a multicast service packet that is delivered from the multicast server (605) and transmitted through the third device (603); and,
after the ring network protocol controls a blocking point to change, so that a forwarding path is switched, thereby changing the port of the second device (602) to not be in the blocked state and changing the port of the third device (603) to be in the blocked state, receiving a multicast service packet that is delivered from the multicast server (605) according to the forwarding table entry which has been established based on the multicast control packet and transmitted through the second device (602).

2. The fast service restoration method in the path switching process according to claim 1, comprising:
after receiving the multicast control packet, determining, by the second device (602), whether the multicast control packet carries the transparent transmission identifier, and if the multicast control packet carries the transparent transmission identifier, transparently transmitting the multicast control packet to the multicast server (605).

3. The fast service restoration method in the path switching process according to claim 2, before the sending multicast control packet to a second device (602) and a third device (603) through a first interface and a second interface respectively, further comprising:
receiving multicast packets and identifying the multicast control packet; and
adding a user-defined penetration identifier to the multicast control packet.

4. The fast service restoration method in the path switching process according to claim 3, further comprising:
replicating the multicast control packet to which the user-defined penetration identifier is added, to obtain a plurality of multicast control packet.

5. The fast service restoration method in the path switching process according to any one of claims 1 to 4, before the multicast control packet are sent to the multicast server (605) through the ports of the second device (602) and the third device (603), further comprising:
sending, by the second device (602), the multicast control packet to a fourth device; and
sending, by the third device (603), the multicast control packet to a fifth device; wherein
the fourth device is connected between the second device (602) and the multicast server (605), and the fifth device is connected between the third device (603) and the multicast server (605).

6. A multicast system, comprising a first device (601), a second device (602), a third device (603), and a multicast server (605), wherein the first device (601) is connected to the second device (602) and the third device (603) through a first interface and a second interface respectively, a port of at least one of the second device (602) and the third device (603) is in a blocked state controlled by a ring network protocol, and both the second device (602) and the third device (603) are connected to the multicast server (605); and wherein the first device (601) comprises:
a sending unit (501), configured to send a multicast control packet to the second device (602) by the first interface and send the multicast control packet to the third device (603) by the second interface, wherein a port of the second device (602) is in a blocked state controlled by a ring network protocol, a port of the third device (603) is not in the blocked state, the multicast control packet carries a transparent transmission identifier which is configured to indicate a device in the blocked state to transparently transmit the multicast control packet to the multicast server (605) through both the second device (602) and the third device (603), and the multicast control packet is configured to establish negotiation of a service protocol with the multicast server (605) and to establish a forwarding table entry with the multicast server (605) for the path through the second device (602) and the path through the third device (603);
a receiving unit (502), configured to receive a multicast service packet that is delivered from the multicast server (605) and transmitted through the third device (603), and receive, after the ring network protocol controls a blocking point to change, so that a forwarding path is switched, thereby changing the port of the second device (602) to not be in the blocked state and changing the port of the third device (603) to be in the blocked state, a multicast service packet that is delivered from the multicast server (605) according to the forwarding table entry which has been established based on the multicast control packet and transmitted through the second device (602).

7. The system according to claim 6, wherein after receiving the multicast control packet, the second device (602) determines whether the multicast control packet carries the transparent transmission identifier, and if the multicast control packet carries the transparent transmission identifier, transparently transmits the multicast control packet to the multicast server (605).

8. The system according to claim 6, further comprising a processing unit, wherein
before the sending unit (501) sends the multicast control packet to the second device (602) and the third device (603) through the first interface and the second interface respectively, the receiving unit (502) further receives multicast packets and sends the multicast packets to the processing unit; and
the processing unit identifies the multicast control packet and adds a user-defined penetration identifier to the multicast control packet.

9. The system according to claim 8, wherein the processing unit is further configured to replicate the multicast control packet to which the user-defined penetration identifier is added, to obtain a plurality of multicast control packet.

10. The system according to any one of claims 6 to 8, wherein before the multicast control packet are sent to the multicast server (605) through the ports of the second device (602) and the third device (603),
the second device (602) sends the multicast control packet to a fourth device, and the third device (603) sends the multicast control packet to a fifth device; wherein
the fourth device is connected between the second device (602) and the multicast server (605), and the fifth device is connected between the third device (603) and the multicast server (605).

## Patentansprüche

1. Verfahren zur schnellen Dienstwiederherstellung in einem Pfadumschaltprozess, umfassend:
Senden eines Multicast-Steuerpakets an eine zweite Vorrichtung (602) durch eine erste Schnittstelle einer ersten Vorrichtung (601), wobei ein Port der zweiten Vorrichtung (602) in einem blockierten Zustand ist, der durch ein Ringnetzwerkprotokoll gesteuert wird, wobei das Multicast-Steuerpaket eine Kennung für transparente Übertragung führt, die dazu ausgelegt ist, einer Vorrichtung in dem blockierten Zustand anzugeben, das Multicast-Steuerpaket transparent an einen Multicast-Server (605) zu übertragen, sodass das Multicast-Steuerpaket über den Port der zweiten Vorrichtung (602) an den Multicast-Server (605) gesendet wird;
Senden des Multicast-Steuerpakets an eine dritte Vorrichtung (603) durch eine zweite Schnittstelle der ersten Vorrichtung (601), wobei ein Port der dritten Vorrichtung (603) nicht in dem blockierten Zustand ist, sodass das Multicast-Steuerpaket über den Port der dritten Vorrichtung (603) an den Multicast-Server (605) gesendet wird;
wobei das Multicast-Steuerpaket dazu ausgelegt ist, eine Verhandlung eines Dienstprotokolls mit dem Multicast-Server (605) einzurichten und einen Weiterleitungstabelleneintrag mit dem Multicast-Server (605) für den Pfad über die zweite Vorrichtung (602) und den Pfad über die dritte Vorrichtung (603) einzurichten;
Empfangen, durch die erste Vorrichtung (601), eines Multicast-Dienstpakets, das von dem Multicast-Server (605) geliefert und über die dritte Vorrichtung (603) übertragen wird; und,
nachdem das Ringnetzwerkprotokoll eine Änderung eines Blockierpunkts steuert, so dass ein Weiterleitungspfad umgeschaltet wird, wodurch der Port der zweiten Vorrichtung (602) so geändert wird, dass er nicht in dem blockierten Zustand ist, und der Port der dritten Vorrichtung (603) so geändert wird, dass er in dem blockierten Zustand ist, Empfangen eines Multicast-Dienstpakets, das von dem Multicast-Server (605) gemäß dem Weiterleitungstabelleneintrag, der basierend auf dem Multicast-Steuerpaket eingerichtet und über die zweite Vorrichtung (602) übertragen wurde, geliefert wird.

2. Verfahren zur schnellen Dienstwiederherstellung in dem Pfadumschaltprozess nach Anspruch 1, umfassend:
nach Empfang des Multicast-Steuerpakets, Bestimmen, durch die zweite Vorrichtung (602), ob das Multicast-Steuerpaket die Kennung für transparente Übertragung führt, und, wenn das Multicast-Steuerpaket die Kennung für transparente Übertragung führt, transparentes Übertragen des Multicast-Steuerpakets an den Multicast-Server (605).

3. Verfahren zur schnellen Dienstwiederherstellung in dem Pfadumschaltprozess nach Anspruch 2, das vor dem Senden eines Multicast-Steuerpakets an eine zweite Vorrichtung (602) und eine dritte Vorrichtung (603) über eine erste Schnittstelle bzw. eine zweite Schnittstelle ferner Folgendes umfasst:
Empfangen von Multicast-Paketen und Identifizieren des Multicast-Steuerpakets; und
Hinzufügen einer Kennung für benutzerdefinierte Penetration zu dem Multicast-Steuerpaket.

4. Verfahren zur schnellen Dienstwiederherstellung in dem Pfadumschaltprozess nach Anspruch 3, ferner umfassend:
Replizieren des Multicast-Steuerpakets, zu dem die Kennung für benutzerdefinierte Penetration hinzugefügt wird, um mehrere Multicast-Steuerpakete zu erhalten.

5. Verfahren zur schnellen Dienstwiederherstellung in dem Pfadumschaltprozess nach einem der Ansprüche 1 bis 4, das vor dem Senden des Multicast-Steuerpakets an den Multicast-Server (605) über die Ports der zweiten Vorrichtung (602) und der dritten Vorrichtung (603) ferner Folgendes umfasst:
Senden, durch die zweite Vorrichtung (602), des Multicast-Steuerpakets an eine vierte Vorrichtung; und
Senden, durch die dritte Vorrichtung (603), des Multicast-Steuerpakets an eine fünfte Vorrichtung; wobei
die vierte Vorrichtung zwischen der zweiten Vorrichtung (602) und dem Multicast-Server (605) verbunden ist und die fünfte Vorrichtung zwischen der dritten Vorrichtung (603) und dem Multicast-Server (605) verbunden ist.

6. Multicast-System, umfassend eine erste Vorrichtung (601), eine zweite Vorrichtung (602), eine dritte Vorrichtung (603) und einen Multicast-Server (605), wobei die erste Vorrichtung (601) über eine erste Schnittstelle bzw. eine zweite Schnittstelle mit der zweiten Vorrichtung (602) und der dritten Vorrichtung (603) verbunden ist, ein Port der zweiten Vorrichtung (602) und/oder der dritten Vorrichtung (603) in einem blockierten Zustand ist, der durch ein Ringnetzwerkprotokoll gesteuert wird, und sowohl die zweite Vorrichtung (602) als auch die dritte Vorrichtung (603) mit dem Multicast-Server (605) verbunden ist; und wobei die erste Vorrichtung (601) Folgendes umfasst:
eine Sendeeinheit (501), ausgelegt zum Senden eines Multicast-Steuerpakets an die zweite Vorrichtung (602) durch die erste Schnittstelle und Senden des Multicast-Steuerpakets an die dritte Vorrichtung (603) durch die zweite Schnittstelle, wobei ein Port der zweiten Vorrichtung (602) in einem blockierten Zustand ist, der durch ein Ringnetzwerkprotokoll gesteuert wird, ein Port der dritten Vorrichtung (603) nicht in dem blockierten Zustand ist, das Multicast-Steuerpaket eine Kennung für transparente Übertragung führt, die dazu ausgelegt ist, einer Vorrichtung in dem blockierten Zustand anzugeben, das Multicast-Steuerpaket über sowohl die zweite Vorrichtung (602) als auch die dritte Vorrichtung (603) transparent an den Multicast-Server (605) zu übertragen, und das Multicast-Steuerpaket dazu ausgelegt ist, eine Verhandlung eines Dienstprotokolls mit dem Multicast-Server (605) einzurichten und einen Weiterleitungstabelleneintrag mit dem Multicast-Server (605) für den Pfad über die zweite Vorrichtung (602) und den Pfad über die dritte Vorrichtung (603) einzurichten;
eine Empfangseinheit (502), ausgelegt zum Empfangen eines Multicast-Dienstpakets, das von dem Multicast-Server (605) geliefert und über die dritte Vorrichtung (603) übertragen wird, und Empfangen, nachdem das Ringnetzwerkprotokoll eine derartige Änderung eines Blockierpunkts steuert, dass ein Weiterleitungspfad umgeschaltet wird, wodurch der Port der zweiten Vorrichtung (602) so geändert wird, dass er nicht in dem blockierten Zustand ist, und der Port der dritten Vorrichtung (603) so geändert wird, dass er in dem blockierten Zustand ist, eines Multicast-Dienstpakets, das von dem Multicast-Server (605) gemäß dem Weiterleitungstabelleneintrag, der basierend auf dem Multicast-Steuerpaket eingerichtet und über die zweite Vorrichtung (602) übertragen wurde, geliefert wird.

7. System nach Anspruch 6, wobei die zweite Vorrichtung (602) nach Empfangen des Multicast-Steuerpakets bestimmt, ob das Multicast-Steuerpaket die Kennung für transparente Übertragung führt, und, wenn das Multicast-Steuerpaket die Kennung für transparente Übertragung führt, das Multicast-Steuerpaket transparent an den Multicast-Server (605) überträgt.

8. System nach Anspruch 6, ferner umfassend eine Verarbeitungseinheit, wobei,
bevor die Sendeeinheit (501) das Multicast-Steuerpaket über eine erste Schnittstelle bzw. eine zweite Schnittstelle an die zweite Vorrichtung (602) und die dritte Vorrichtung (603) sendet, die Empfangseinheit (502) ferner Multicast-Pakete empfängt und die Multicast-Pakete an die Verarbeitungseinheit sendet; und
die Verarbeitungseinheit das Multicast-Steuerpaket identifiziert und eine Kennung für benutzerdefinierte Penetration zu dem Multicast-Steuerpaket hinzufügt.

9. System nach Anspruch 8, wobei die Verarbeitungseinheit ferner ausgelegt ist zum Replizieren des Multicast-Steuerpakets, zu dem die Kennung für benutzerdefinierte Penetration hinzugefügt wird, um mehrere Multicast-Steuerpakete zu erhalten.

10. System nach einem der Ansprüche 6 bis 8, wobei, bevor das Multicast-Steuerpaket über die Ports der zweiten Vorrichtung (602) und der dritten Vorrichtung (603) an den Multicast-Server (605) gesendet wird,
die zweite Vorrichtung (602) das Multicast-Steuerpaket an eine vierte Vorrichtung sendet und die dritte Vorrichtung (603) das Multicast-Steuerpaket an eine fünfte Vorrichtung sendet; wobei
die vierte Vorrichtung zwischen der zweiten Vorrichtung (602) und dem Multicast-Server (605) verbunden ist und die fünfte Vorrichtung zwischen der dritten Vorrichtung (603) und dem Multicast-Server (605) verbunden ist.

## Revendications

1. Procédé de rétablissement rapide de service dans un processus de commutation de trajet, comprenant :
l'envoi d'un paquet de commande multicast à un deuxième dispositif (602) par une première interface d'un premier dispositif (601), un port du deuxième dispositif (602) étant dans un état bloqué commandé par un protocole de réseau en anneau, le paquet de commande multicast véhiculant un identifiant de transmission transparente qui est configuré pour indiquer à un dispositif dans l'état bloqué de transmettre de manière transparente le paquet de commande multicast à un serveur multicast (605), de sorte que le paquet de commande multicast est envoyé au serveur multicast (605) via le port du deuxième dispositif (602) ;
l'envoi du paquet de commande multicast à un troisième dispositif (603) par une deuxième interface du premier dispositif (601), un port du troisième dispositif (603) n'étant pas dans l'état bloqué, de sorte que le paquet de commande multicast est envoyé au serveur multicast (605) via le port du troisième dispositif (603) ;
le paquet de commande multicast étant configuré pour établir une négociation d'un protocole de service avec le serveur multicast (605) et pour établir une entrée de table de transfert avec le serveur multicast (605) pour le trajet via le deuxième dispositif (602) et le trajet via le troisième dispositif (603) ;
la réception, par le premier dispositif (601), d'un paquet de service multicast qui provient du serveur multicast (605) et qui est transmis via le troisième dispositif (603) ; et,
après la commande, par le protocole de réseau en anneau, de la modification d'un point de blocage, de sorte à commuter un trajet de transfert, pour ainsi faire quitter l'état bloqué au port du deuxième dispositif (602) et faire passer à l'état bloqué le port du troisième dispositif (603), la réception d'un paquet de service multicast qui provient du serveur multicast (605) selon l'entrée de table de transfert qui a été établie sur la base du paquet de commande multicast et qui est transmis via le deuxième dispositif (602).

2. Procédé de rétablissement rapide de service dans le processus de commutation de trajet selon la revendication 1, comprenant :
après la réception du paquet de commande multicast, la détermination, par le deuxième dispositif (602), si le paquet de commande multicast véhicule ou non l'identifiant de transmission transparente et, si le paquet de commande multicast véhicule l'identifiant de transmission transparente, la transmission transparente du paquet de commande multicast au serveur multicast (605).

3. Procédé de rétablissement rapide de service dans le processus de commutation de trajet selon la revendication 2, comprenant en outre, avant l'envoi d'un paquet de commande multicast à un deuxième dispositif (602) et à un troisième dispositif (603) via respectivement une première interface et une deuxième interface :
la réception de paquets multicast et l'identification du paquet de commande multicast ; et
l'ajout d'un identifiant de pénétration défini par l'utilisateur au paquet de commande multicast.

4. Procédé de rétablissement rapide de service dans le processus de commutation de trajet selon la revendication 3, comprenant en outre :
la réplication du paquet de commande multicast auquel est ajouté l'identifiant de pénétration défini par l'utilisateur, afin d'obtenir une pluralité de paquets de commande multicast.

5. Procédé de rétablissement rapide de service dans le processus de commutation de trajet selon l'une quelconque des revendications 1 à 4, comprenant en outre, avant l'envoi du paquet de commande multicast au serveur multicast (605) via les ports du deuxième dispositif (602) et du troisième dispositif (603) :
l'envoi, par le deuxième dispositif (602), du paquet de commande multicast à un quatrième dispositif ; et
l'envoi, par le troisième dispositif (603), du paquet de commande multicast à un cinquième dispositif ;
le quatrième dispositif étant connecté entre le deuxième dispositif (602) et le serveur multicast (605), et le cinquième dispositif étant connecté entre le troisième dispositif (603) et le serveur multicast (605).

6. Système multicast, comprenant un premier dispositif (601), un deuxième dispositif (602), un troisième dispositif (603), et un serveur multicast (605), le premier dispositif (601) étant connecté au deuxième dispositif (602) et au troisième dispositif (603) via respectivement une première interface et une deuxième interface, un port d'au moins un dispositif parmi le deuxième dispositif (602) et le deuxième dispositif (603) étant dans un état bloqué commandé par un protocole de réseau en anneau, et le deuxième dispositif (602) et le troisième dispositif (603) étant tous deux connectés au serveur multicast (605) ; et le premier dispositif (601) comprenant :
une unité d'envoi (501), configurée pour envoyer un paquet de commande multicast au deuxième dispositif (602) par la première interface et envoyer le paquet de commande multicast au troisième dispositif (603) par la deuxième interface, un port du deuxième dispositif (602) étant dans un état bloqué commandé par un protocole de réseau en anneau, un port du troisième dispositif (603) n'étant pas dans l'état bloqué, le paquet de commande multicast véhiculant un identifiant de transmission transparente qui est configuré pour indiquer à un dispositif dans l'état bloqué de transmettre de manière transparente le paquet de commande multicast au serveur multicast (605) via à la fois le deuxième dispositif (602) et le troisième dispositif (603), et le paquet de commande multicast étant configuré pour établir une négociation d'un protocole de service avec le serveur multicast (605) et pour établir une entrée de table de transfert avec le serveur multicast (605) pour le trajet via le deuxième dispositif (602) et le trajet via le troisième dispositif (603) ;
une unité de réception (502), configurée pour recevoir un paquet de service multicast qui provient du serveur multicast (605) et qui est transmis via le troisième dispositif (603), et recevoir, après la commande, par le protocole de réseau en anneau, de la modification d'un point de blocage, de sorte à commuter un trajet de transfert, pour ainsi faire quitter l'état bloqué au port du deuxième dispositif (602) et faire passer à l'état bloqué le port du troisième dispositif (603), un paquet de service multicast qui provient du serveur multicast (605) selon l'entrée de table de transfert qui a été établie sur la base du paquet de commande multicast et qui est transmis via le deuxième dispositif (602).

7. Système selon la revendication 6, dans lequel, après la réception du paquet de commande multicast, le deuxième dispositif (602) détermine si le paquet de commande multicast véhicule ou non l'identifiant de transmission transparente et, si le paquet de commande multicast véhicule l'identifiant de transmission transparente, transmet de manière transparente le paquet de commande multicast au serveur multicast (605).

8. Système selon la revendication 6, comprenant en outre une unité de traitement, dans lequel avant que l'unité d'envoi (501) envoie le paquet de commande multicast au deuxième dispositif (602) et au troisième dispositif (603) via respectivement la première interface et la deuxième interface, l'unité de réception (502) reçoit en outre des paquets multicast et envoie les paquets multicast à l'unité de traitement ; et
l'unité de traitement identifie le paquet de commande multicast et ajoute un identifiant de pénétration défini par l'utilisateur au paquet de commande multicast.

9. Système selon la revendication 8, dans lequel l'unité de traitement est configurée en outre pour répliquer le paquet de commande multicast auquel est ajouté l'identifiant de pénétration défini par l'utilisateur, afin d'obtenir une pluralité de paquets de commande multicast.

10. Système selon l'une quelconque des revendications 6 à 8, dans lequel, avant l'envoi du paquet de commande multicast au serveur multicast (605) via les ports du deuxième dispositif (602) et du troisième dispositif (603),
le deuxième dispositif (602) envoie le paquet de commande multicast à un quatrième dispositif, et le troisième dispositif (603) envoie le paquet de commande multicast à un cinquième dispositif ;
le quatrième dispositif étant connecté entre le deuxième dispositif (602) et le serveur multicast (605), et le cinquième dispositif étant connecté entre le troisième dispositif (603) et le serveur multicast (605).
